**Europäisches Patentamt**

**European Patent Office**

**Office européen des brevets**

(11) Veröffentlichungsnummer: **0 139 980**

**B1**

(12) # EUROPÄISCHE PATENTSCHRIFT

(45) Veröffentlichungstag der Patentschrift:
**14.12.88**

(21) Anmeldenummer: **84109958.3**

(22) Anmeldetag: **21.08.84**

(51) Int. Cl.⁴: **H 01 R 4/64, H 01 R 4/48,**
**H 01 R 9/05, H 02 G 3/26**

(54) **Kabelschelle.**

(30) Priorität: **18.10.83 DE 8330036 U**
**25.01.84 DE 8402079 U**

(43) Veröffentlichungstag der Anmeldung:
**08.05.85 Patentblatt 85/19**

(45) Bekanntmachung des Hinweises auf die Patenterteilung:
**14.12.88 Patentblatt 88/50**

(84) Benannte Vertragsstaaten:
**AT CH DE FR GB IT LI NL SE**

(56) Entgegenhaltungen:
**EP-A-0 053 876**
**DE-A-2 622 136**
**DE-B-2 310 231**
**FR-A-2 390 660**
**GB-A-309 284**
**GB-A-934 771**
**US-A-4 037 810**

(73) Patentinhaber: **Nixdorf Computer**
**Aktiengesellschaft, Fürstenallee 7, D-4790**
**Paderborn (DE)**

(72) Erfinder: **Knoop, Franz-Josef, Sonnenhang 7,**
**D-4793 Büren-Steinhausen (DE)**

(74) Vertreter: **Schaumburg, Thoenes & Englaender,**
**Mauerkircherstrasse 31 Postfach 86 07 48, D-8000**
**München 80 (DE)**

## Beschreibung

Die Erfindung betrifft eine Kabelschelle, umfassend zwei miteinander verbindbare Schellenteile, zwischen denen ein Kabel einklemmbar ist, und die von identisch ausgeformten Kunststoffteilen gebildet sind.

Herkömmliche Kabelschellen der vorstehend genannten Art, wie sie z. B. aus der FR-A-2 390 660 bekannt sind, sind zwar als Befestigungselemente und Zugentlastung des Kabels geeignet, erlauben aber keine zuverlässige Massekontaktierung des Schirmleiters eines Kabels. Zur Massekontaktierung wird in der Regel der Isoliermantel eines Kabels bis auf den Schirmleiter abisoliert und auf dem Schirmleiter eine Erdungslitze angelötet. Diese Erdungslitze stellt die Verbindung zwischen Schirmleiter und beispielsweise dem geerdeten Gehäuse dar. Der aufgetrennte Isoliermantel mit der Lötstelle wird durch einen Schrumpfschlauch abgedeckt. Diese Arbeitsvorgänge bedeuten einen erheblichen Montageaufwand. Ein nach dieser Art kontaktiertes Kabel besitzt ohne eine zusätzliche Schelle keine Zugentlastung und ist mechanisch nur über die Erdungslitze fixiert, die jedoch nicht als Zugentlastung oder als mechanisches Befestigungselement geeignet ist.

Der Erfindung liegt die Aufgabe zugrunde, eine Kabelschelle der eingangs genannten Art anzugeben, die einfach und preiswert in der Herstellung sowie einfach zu montieren ist, als Befestigungselement und Zugentlastung verwendet werden kann und dabei eine zuverlässige Massekontaktierung eines Schirmleiters des Kabels ermöglicht.

Diese Aufgabe wird erfindungsgemäß durch die im kennzeichnenden Teil des Anspruchs 1 angegebenen Merkmale gelöst.

Durch die identische Ausformung der beiden Schellenteile lassen sich die Herstellungskosten für derartige Schellen erheblich senken. Die Kontaktfeder kann nach dem Abisolieren des Kabels bis auf den Schirmleiter mit diesem in Berührung gebracht werden, so daß ein zuverlässiger Massekontakt gewährleistet ist. Die zum Eingriff miteinander bestimmten Rastmittel an den Schellenteilen ermöglichen eine einfache Montage und gewährleisten einen sicheren Halt der Kabelschelle an dem Kabel, so daß bei einer Befestigung der Schelle an einem Gehäuse oder einem Schellenträger das Kabel fest liegt und die Schirmleitung sowie die Kontaktstelle zwischen der Kontaktfeder und dem Schirmleiter von einem auf das Kabel ausgeübten Zug entlastet ist.

Die Rastmittel sind vorzugsweise in Form von ineinandergreifenden Zahnleisten ausgebildet. Auf diese Weise können die beiden Schellenteile in unterschiedlichen Stellungen relativ zueinander verrastet werden. Dabei weisen die Zahnleisten vorzugsweise ein Sägezahnprofil mit in Einschubrichtung ansteigenden Zahnflanken auf, so daß die Schellenteile in Richtung aufeinander zubewegt, jedoch ohne Hilfe von Werkzeugen nicht ohne weiteres wieder auseinander gezogen werden können. Rastmittel der vorstehend genannten Art sind an sich für Kabelschellen aus der DE-A-2 622 136 bekannt.

Bei einer ersten Ausführungsform der neuerungsgemäßen Kabelschelle umfaßt jedes Schellenteil einen im wesentlichen quaderförmigen Sockel, der die Öffnungen zum Durchtritt der Kontaktfeder sowie gegebenenfalls Durchbrechungen zum Durchtritt von Befestigungsschrauben aufweist. Ferner trägt der Sockel an einer seiner Seitenflächen eine Außenverzahnung und an der entgegengesetzten Seitenfläche eine parallel zur Durchstecköffnung der Kontaktfeder gerichteten Lappen, an dessen Innenseite eine zum Eingriff mit der Außenverzahnung an dem jeweils anderen Schellenteil bestimmte Innenverzahnung ausgebildet ist. Die das Kabel zwischen sich aufnehmenden Schellenteile werden gegeneinander gedrückt, wo bei die Verzahnungen ineinander eingreifen. Anschließend werden die beiden Schellenteile mit Hilfe von Befestigungsschrauben in der jeweiligen Lage und gegebenenfalls an einem Träger oder Gehäuse fixiert.

Gemäß einer bevorzugten Ausführungsform sind die beiden Schellenteile von U-förmigen Bügeln gebildet, deren erster U-Schenkel als Aufnahmeschiene zum Einschieben des jeweils zweiten U-Schenkels des anderen Bügels ausgebildet ist, wobei die Öffnung zum Durchstecken der Kontaktfeder in dem U-Quersteg des Bügels und die Rastmittel an den einander zugekehrten Flächen der ineinander steckbaren U-Schenkel der Bügel ausgebildet sind. Im Gegensatz zu der ersten Lösung bedarf es bei dieser Ausführungsform keiner Befestigungschrauben, um die beiden Schellenteile zusammenzuhalten. Es genügt, die beiden Schellenteile ineinander zu schieben und zusammenzudrücken. Vorzugsweise ist dabei an dem als Aufnahmeschiene ausgebildeten ersten U-Schenkel mindestens eine nach innen weisende parallel zur Einschubrichtung des zweiten U-Schenkels des anderen Schellenteiles gerichtete Innenzahnleiste und an dem zweiten U-Schenkel mindestens eine parallel gerichtete nach außen weisende Außenzahnleiste ausgebildet. Somit können die beiden Schellenteile entsprechend dem jeweiligen Durchmesser des einzuspannenden Kabels in unterschiedlichen, durch die Zahnteilung vorgegebenen Stellungen relativ zueinander fixiert werden. Ein sicherer Eingriff zwischen den beiden Schellenteilen ergibt sich, wenn die Aufnahmeschiene zwei die parallel zur Einschubrichtung gerichteten Ränder des zweiten U-Schenkels umgreifende C-Profile umfaßt, wobei entlang des Randes jeweils eines Schenkels der C-Profile eine Innenzahnleiste ausgebildet ist.

Um ein Rutschen des Kabels zwischen den Schellenteilen zu vermeiden, sind diese auf ihren dem einzuklemmenden Kabel zugewandten Innenseiten mit mindestens einem zur Anlage an dem zu haltenden Kabel bestimmten scharfkantigen Vorsprung versehen, der sich beim Zusammenspannen der beiden Schellenteile in den Isoliermantel des zu haltenden Kabels eindrücken kann. Der Vorsprung kann beispielsweise stegförmig ausgebildet sein, wobei die nach innen weisende freie Stegkante zweckmäßigerweise konkav gekrümmt ist, so daß sie sich über einen größeren Bereich des Kabelumfanges in dessen Isoliermantel eindrücken kann. Alternativ dazu oder auch zusätzlich dazu können eine Mehrzahl von dornförmigen Vorsprüngen vorgesehen sein, die sich in den Isoliermantel des Kabels eindrücken, wenn die beiden Schellenteile gegeneinander gespannt werden.

Vorzugsweise weist jedes Schellenteil zwei durch einen Steg voneinander getrennte Durchstecköffnungen für die Kontaktfeder auf, die ihrerseits aus einem U-förmig gebogenen Metallstreifen besteht, wobei die Federschenkel der Kontaktfeder annähernd in ihre Längsmitte nach innen umgebogen sind, so daß sich ihre freien Enden nahe dem U-Quersteg der Kontaktfeder berühren. Mit den beiden Federschenkeln wird die Kontaktfeder durch die beiden Durchstecköffnungen hindurchgesteckt, so daß ihr U-Quersteg an der Außenseite des jeweiligen Schellenteiles anliegt. Wird die Kabelschelle mit dem die Kontaktfeder tragenden Schellenteil gegen eine Gehäusewand oder eine Kontaktschiene gespannt, so ist ein sicherer Massekontakt zwischen dem Schirmleiter des eingespannten Kabels und der Kontaktschiene oder der betreffenden Gehäusewand möglich. Vorzugsweise ist der Abstand der freien Enden der Federschenkel von dem U-Quersteg der Kontaktfeder mindestens gleich der Höhe des die beiden Durchstecköffnungen trennenden Steges. Nach dem Einstecken der Kontaktfeder in die Durchstecköffnungen können somit die freien Federenden über den Steg aufeinander zuschnappen und halten die Kontaktfeder in dem betreffenden Schellenteil fest. Die Länge der Federschenkel der Kontaktfeder ist so gewählt, daß sie bei zusammengesteckten Schellenteilen ungefähr der Abmessung der gesamten Kabelschelle in der Einschubrichtung entspricht.

Um auch in den Fällen, in denen die Kabelschelle nicht zusammen mit der Kontaktfeder mit Hilfe von Befestigungsschrauben an einem Schellenträger befestigt wird, eine sichere Verbindung zwischen der Kontaktfeder und der Schellenteilen herzustellen, wird vorgeschlagen, daß jedes Schellenteil im Bereich der Durchstecköffnung für die Kontaktfeder einen Rastvorsprung aufweist, der zum Eingriff mit einem komplementären Gegenrastelement an der Kontaktfeder bestimmt ist. Dies bietet verschiedene Möglichkeiten. Beispielsweise kann die Kontaktfeder an einer als Schellenträger dienenden Erdungsschiene angeschweißt, angeschraubt oder angenietet sein, so daß die Kabelschelle nach dem Anbringen an dem Kabel nur noch auf die Kontaktfeder aufgesteckt zu werden braucht, wobei durch das Einrasten des Rastvorsprunges an dem Gegenrastelement der Kontaktfeder eine sichere Verbindung zwischen der Kabelschelle und der Kontaktfeder bzw. dem Schellenträger geschaffen wird die als Zugentlastung auch in Einschubrichtung der Kontaktfeder wirkt. Diese Lösung ermöglicht eine rasche Montage und Demontage des Kabels, da das Anbringen und Lösen von Befestigungsschrauben entfällt.

Um auch die Kompatibilität mit bisherigen Geräten zu ermöglichen, kann bei der neuerungsgemäßen Lösung auch die Kontaktfeder mit einem Verbindungselement zur Verbindung mit einer Erdungslitze versehen sein. So kann die Kontaktfeder eine Durchbrechung aufweisen, durch die beispielsweise eine Anschlußschraube hindurchsteckbar ist. Vorzugsweise ist jedoch an der Kontaktfeder ein Anschlußbolzen angeschweißt, an den eine Erdungslitze direkt oder ein Stecker zum Anstecken einer Erdungslitze angeschraubt ist.

Vorzugsweise ist der Rastvorsprung jeweils von einer federnden Rastnase und das zugehörige Gegenrastelement von einer Aussparung in der Kontaktfeder gebildet, wobei die Rastnasen vorzugsweise einstückig mit den Schellenteilen ausgebildet sind.

Bei einer oben beschriebenen U-förmigen Kontaktfeder ist vorzugsweise im Bereich jeder Durchstecköffnung eines Schellenteiles eine Rastnase vorgesehen, der jeweils mindestens einer Aussparung in den U-Schenkeln der Kontaktfeder entspricht. Vorzugsweise sind dabei die Rastnasen eines Schellenteiles sowie die Aussparungen in der Kontaktfeder jeweils gegenläufig versetzt gegenüber einer die U-Schenkel und den U-Quersteg von Schellenteilen und Kontaktfeder durchsetzenden Mittelebene angeordnet, wobei der Abstand der Aussparungen in den U-Schenkeln der Kontaktfeder von deren U-Quersteg so gewählt ist, daß beim Einschieben der Kontaktfeder in die Kabelschelle die Rastnasen des Schellenteiles, das dem U-Quersteg der Kontaktfeder ferner liegt, in die Aussparungen der Kontaktfeder einrasten. Auf diese Weise dient die Kontaktfeder nicht nur zum Zusammenhalten der beiden Schellenteile, sondern durch Zusammendrücken der aus dem Schellenteil herausragenden Enden der Kontaktfeder kann der Rasteingriff mit dem Schellenteil gelöst werden, so daß die Kabelschelle von der Kontaktfeder abgezogen werden kann.

Weitere Vorteile der Erfindung ergeben sich aus der folgenden Beschreibung, welche in Verbindung mit den beigefügten Zeichnungen die Erfindung anhand zweier Ausführungsbeispiele erläutert. Darin zeigen:

Fig. 1    Eine Draufsicht auf ein Schellenteil gemäß einer ersten Ausführungsform der Erfindung,

Fig. 2 einen Schnitt längs Linie II-II in Fig. 1

Fig. 3 eine Seitenansicht des in den Fig. 1 und 2 dargestellten Schellenteiles - in Richtung des Pfeiles A in Fig. 1,

Fig. 4 eine Seitenansicht zweier zum Ineinanderstecken bestimmter Schellenteile in Richtung des Pfeiles B in Fig. 1

Fig. 5 eine perspektivische Seitenansicht der Kontaktfeder alleine,

Fig. 6 eine perspektivische Darstellung einer zweiten Ausführungsform der erfindungsgemäßen Kabelschelle vor ihrer Montage an einer Kontaktschiene mit Hilfe von Befestigungsschrauben,

Fig. 7 eine perspektivische Ansicht zweier Kabelschellen gemäß der zweiten Ausführungsform der Erfindung nach ihrer Montage an einer Kontaktschiene,

Fig. 8 eine vergrößerte perspektivische Ansicht eines Schellenteiles mit Rastnasen und

Fig. 9 eine Darstellung der Verbindung einer Kontaktfeder mit einer Edungslitze.

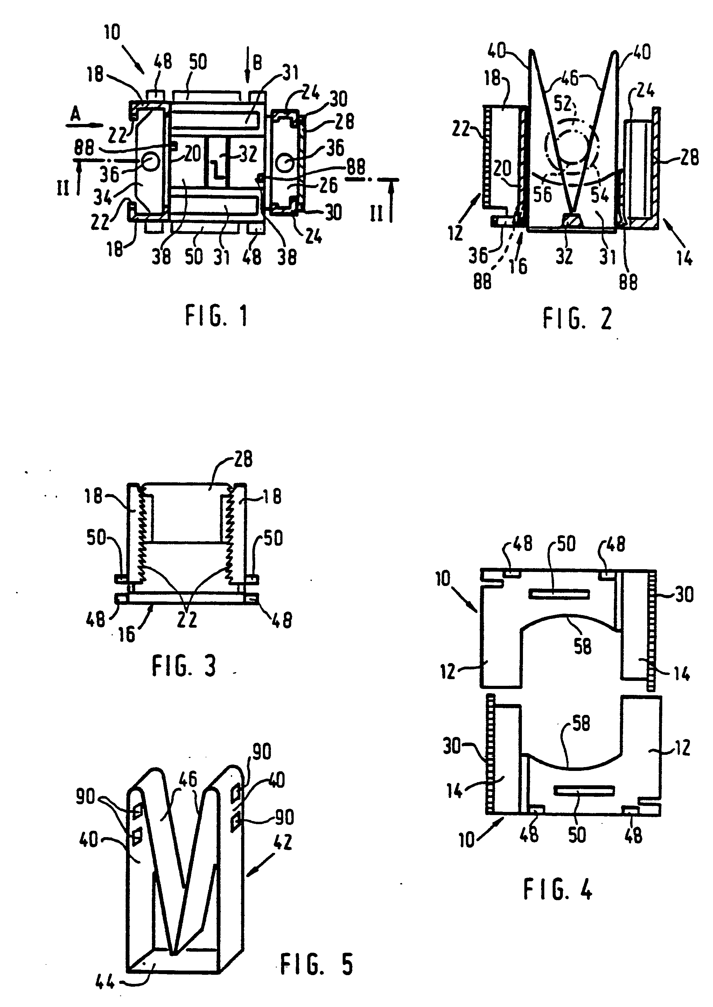

Die erfindungsgemäße Kabelschelle besteht aus zwei identischen Schellenteilen, die beispielsweise im Spritzgußverfahren aus Kunststoff hergestellt werden. Anhand der Fig. 1 bis 4 wird daher nur eines dieser Schellenteile beschrieben.

Das allgemein mit 10 bezeichnete Schellenteil hat die Form eines U-förmigen Bügels oder Gehäuses mit einem ersten U-Schenkel 12, einem zweiten U-Schenkel 14 und einem die beiden verbindenden U-Quersteg 16. Der erste U-Schenkel 12 besteht im wesentlichen aus zwei mit ihren offenen Seiten einander zugekehrten C-Profilen 18 (Fig. 1), die durch einen Steg 20 miteinander verbunden sind und eine Aufnahmeschiene bilden, die zur Aufnahme des zweiten U-Schenkels 14 eines zweiten Schellenteiles 10 bestimmt ist , wie dies anhand der Fig. 4 noch erläutert wird. Die einander zugekehrten äußeren Ränder der C-Profile 18 tragen jeweils eine zum anderen C-Profil 18 hinweisende Innenzahnleiste 22 mit einem Sägezahnprofil.

Der zweite U-Schenkel 14 besteht ebenfalls aus zwei mit ihren Öffnungen einander zugekehrten C-Profilen 24, die an ihrer Unterseite durch einen Abschnitt 26 des U-Quersteges 16 und an ihrer dem ersten U-Schenkel 12 abgewandten Außenseite durch eine Seitenwand 28 miteinander verbunden sind. Die Breite der C-Profile 24 sowie ihr gegenseitiger Abstand ist so gewählt, daß sie in die C-Profile 18 des ersten U-Schenkels 12 einschiebbar sind. An den parallel zur Profillängsrichtung laufenden Rändern der Seitenwand 28 sind nach außen weisende Außenzahnleisten 30 ausgebildet, die ebenfalls ein Sägezahnprofil aufweisen und beim Einschieben des zweiten U-Schenkels 14 eines Schellenteiles 10 in den ersten U-Schenkel 12 eines anderen Schellenteiles 10 mit den Innenzahnleisten 22 dieses Schellenteiles 10 in Eingriff treten. Wie man in Fig. 3 erkennt, ist dabei das Sägezahnprofil so gewählt, daß die vom U-Quersteg wegweisenden Zahnflanken schräg zum U-Quersteg verlaufen, während die zu ihm hinweisenden Zahnflanken parallel zum U-Quersteg 16 gerichtet sind. Dadurch können zwar aufgrund der begrenzten Elastizität des Kunststoffes die beiden Schellenteile ausgehen von der in Fig. 4 dargestellten Stellung ineinander gedrückt werden, ohne Zuhilfnahme von Werkzeugen jedoch nicht wieder voneinander getrennt werden.

Der U-Quersteg 16 umfaßt jeweils zwei senkrecht zu den U-Schenkeln 12 und 14 gerichtete Doppelwände 31, die untereinander durch einen mittig zwischen den beiden U-Schenkeln 12 und 14 und parallel zu diesen gerichteten Steg 32 miteinander verbunden sind. Ferner umfaßt der U-Quersteg den bereits erwähnten Bodenabschnitt 26 des hohlen zweiten U-Schenkels 14 sowie einen Bodenabschnitt 34 unterhalb des ersten U-Schenkels 12. In den beiden Abschnitten 26 und 34 ist jeweils eine Durchbrechung 36 zum Durchstecken einer Befestigungsschraube ausgebildet.

Die von den beiden U-Schenkeln 12 und 14, den Doppelwänden 31 und dem Steg 32 begrenzten Durchbrechungen 38 im U-Quersteg 16 dienen zum Durchtritt der beiden Federschenkel 40 einer allgemein mit 42 bezeichneten Kontaktfeder. Diese besteht aus einem U-förmig gebogenen Blechstreifen (siehe insbesondere Fig. 5) mit einem U-Quersteg 44 sowie die Federschenkel 40 bildenden U-Schenkeln, die nach innen umgebogen sind, so daß ihre freien Endabschnitte 46 sich mit ihren Spitzen knapp oberhalb des U-Quersteges 44 der Kontaktfeder 42 berühren. Wie man aus Fig. 2 erkennt, liegt nach dem Durchstecken der Federschenkel 40 durch die Durchbrechungen 38 der U-Schenkel 44 der Kontaktfeder 42 an der Außenseite des Steges 32 an, während der Abstand der freien Endabschnitte 46 der Federschenkel 40 von dem U-Quersteg 44 so gewählt ist, daß die freien Endabschnitte 46 bei vollständig eingeschobener Kontaktfeder 42 über dem Steg 32 einschnappen und aneinander anliegen. Auf diese Weise sitzt die Kontaktfeder 42 fest in dem jeweiligen Schellenteil 10 und kann nicht verloren gehen. Darüber hinaus können die freien Endabschnitte 46 der Federschenkel 40 so die volle Federwirkung auf das einzuspannende Kabel ausüben.

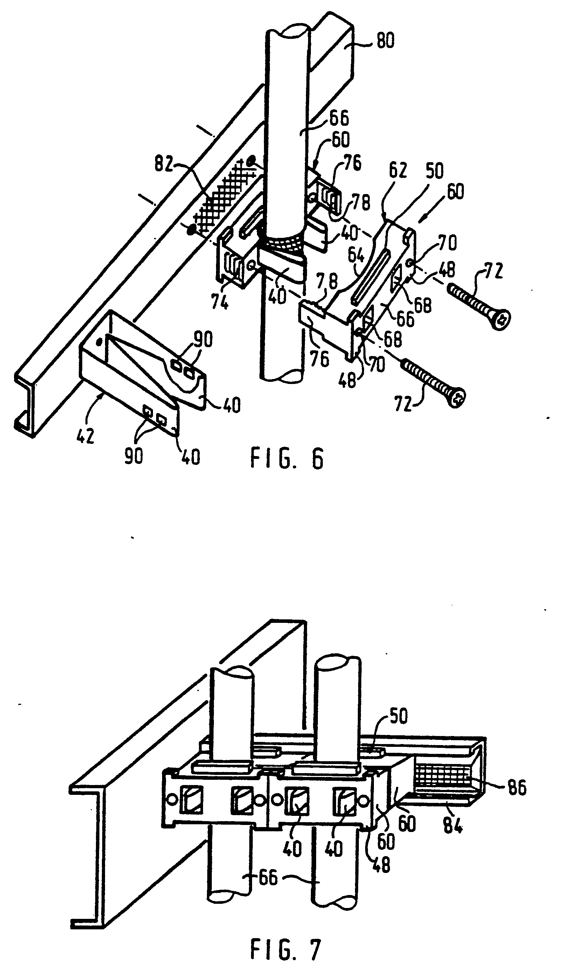

An den Außenseiten der Doppelwände 31 und der C-Profile 18 des ersten U-Schenkels 12 sind Befestigungsnasen 48, 50 ausgebildet, die zur Halterung der Schellenteile an C-förmigen Kontaktschienen dienen, wie dies anhand der Fig. 7 weiter unten noch näher erläutert wird. In diesem Falle bräuchte man die Durchbrechungen 36 in den Bodenabschnitten 34 und 26 des U-Quersteges 16 nicht. Es ist jedoch zweckmäßig, die Schellenteile sowohl zur Befestigung mit Hilfe von Schrauben als auch zum Einschieben in C-förmigen Halterungsschienen auszubilden. Zum Einspannen eines Kabels in der neuerungsgemäßen Kabelschelle genügt es, den Isoliermantel 52 des in der Fig. 2 mit strichpunktierten Linien im Querschnitt angedeuteten Kabels 54 in einem der Breite der Federschenkel 40 entsprechenden Abschnitt zu entfernen, so daß die schlauchförmige Abschirmung 56 des Kabels 54 frei liegt. Mit diesem Abschnitt wird das Kabel zwischen die beiden Federschenkel 40 der Kontaktfeder 42 eingelegt, wie dies in Fig. 2 dargestellt ist. Dann wird ein zweites Schellenteil 10 in der in Fig. 4 dargestellten Weise an das erste Schellenteil 10 angesetzt und mit seinem zweiten U-Schenkel 14 in den ersten U-Schenkel 12 des ersten Schellenteiles 10 eingeschoben, wobei gleichzeit sein erster U-Schenkel 12 den zweiten U-Schenkel 14 des ersten Schellenteiles übergreift. Die beiden Schellenteile 10 werden soweit zusammengedrückt, bis das Kabel 54 zwischen den einander zugekehrten konkav gekrümmten Rändern 58 der die Doppelwände 31 bildenden Stege fest eingeklemmt ist. Vorzugsweise sind diese Ränder 58 scharfkantig ausgebildet, so daß sie sich in den Isoliermantel 52 des Kabels 54 eindrücken und ein Rutschen des Kabels in der Kabelschelle verhindern. Die beiden freien Endabschnitte 46 der Federschenkel 40 werden dabei auseinander gedrückt, so daß sie aufgrund ihrer Federspannung fest an der Abschirmung 56 des Kabels anliegen und führ einen sicheren Massekontakt sorgen. Die beiden ineinander gesteckten Schellenteile 10 werden durch die ineinandergreifenden Innen- und Außenverzahnungen an den beiden jeweils ineinander geschobenen ersten und zweiten U-Schenkeln 12 und 14 fest zusammengehalten und können ohne die Verwendung von Werkzeugen nicht mehr voneinander getrennt werden.

Die Fig. 6 und 7 zeigen die Montage neuerungsgemäßer Kabelschellen anhand einer weiteren Ausführungsform der Neuerung. Die in den Fig. 6 und 7 dargestellte Halterung der Kabel in den Schellen und die Montage der Schellen an Kontaktschienen gilt jedoch in gleicher Form auch für die in den Fig. 1 bis 4 dargestellte Ausführungsform der Kabelschelle. Die Kontaktfeder gemäß Fig. 5 findet auch bei der Ausführungsform gemäß den Fig. 6 und 7 Verwendung.

Die in den Fig. 6 und 7 dargestellte Ausführungsform der neuerungsgemäßen Kabelschelle ist gegenüber der oben beschriebenen Ausführungsform einfacher im Aufbau. Jedes der identisch ausgebildeten allgemein mit 60 bezeichneten Schellenteile umfaßt einen annähernd Quaderförmigen Sockel 62 mit einer kreisbogenförmig gekrümmten Einbuchtung 64 auf seiner dem Kabel 66 zugewandten Seite. Senkrecht zu dieser gekrümmten Seitenfläche 64 verlaufen zwei durch einen Steg 67 voneinander getrennte Durchstecköffnungen 68 zum Durchstecken der beiden Federschenkel 40 der Kontaktfeder 42. Außerhalb der beiden Durchstecköffnungen 68 ist jeweils eine Bohrung 70 zum Durchstecken einer Befestigungsschraube 72 vorgesehen. An den Längsseitenflächen des Sockels 62 sind wie bei der oben beschriebenen ersten Ausführungsform der Neuerung Befestigungsnasen 48 und 50 ausgebildet.

An einer der dazu senkrechten Seitenflächen des Sockels 62 ist eine Außenverzahnung 74 ausgebildet. An der entgegengesetzten Seitenfläche ist ein sich über den Sockel 62 hinauserstreckender Lappen 76 vorgesehen, an dessen Innenseite einer Innenverzahnung 78 ausgebildet ist. Beim Zusammensetzen zweier identischer Schellenteile 60 greifen die Innenverzahnung 78 und die Außenverzahnung 74 des einen Schellenteiles mit der Außenverzahnung 74 bzw. der Innenverzahnung 78 des anderen Schellenteiles ineinander, wobei sich die beiden Schellenteile auch ohne die Zuhilfenahme der Befestigungsschrauben dann nicht mehr lösen können, wenn die beiden Schellenteile 60 soweit zusammengeschoben sind, daß die Enden der Federschenkel 40 der in dem einen Schellenteil steckenden Kontaktfeder 42 in die Durchstecköffnungen 68 des anderen Schellenteiles 60 eingreifen, wie man dies bei der in Fig. 7 dargestellten fertigmontierten Schelle erkennt.

Wenn das Kabel 66 in der oben beschriebenen Weise vorbereitet und zwischen die Federschenkel 40 der Kontaktfeder 42 eingeschoben wurde, können die beiden Schellenteile 60 miteinander verbunden und mit Hilfe der Befestigungsschrauben 72 an einer Kontaktschiene 80 befestigt werden, wobei der außenliegende U-Quersteg 44 der Kontaktfeder 42 gegen die Kontaktschiene 80 gepreßt wird. Dabei kann durch eine an der Kontaktschiene vorgesehene Rauhfläche 82 gegebenenfalls für eine Verbesserung des Kontaktes zwischen der Kontaktfeder 42 und der Kontaktschiene 80 gesorgt werden.

Die in Fig. 7 dargestellte Anordnung unterscheidet sich von der Anordnung gemäß Fig. 6 nur dadurch, daß die aus zwei Schellenteilen 60 fertigmontierten Kabelschellen mit den Befestigungsnasen 48 in C-förmige Kontaktschienen 84 eingeschoben sind, wobei jeweils der außenliegende U-Quersteg 44 der Kontaktfeder 42 gegen eine in der Kontaktschiene 84 angeordnete Kontaktfeder 86 gepreßt wird. Die Befestigungsnasen 50 stützen sich dabei auf der Außenseite der C-Klauen der Kontaktschiene 84 ab. Diese Befestigungart gilt ebenso für die Schellenteile 10, die anhand der Fig. 1 bis 4 beschrieben wurden.

Der wesentliche Vorteil der Erfindung besteht darin, daß die Schellenteile identisch ausgebildet sind, eine kurze und sichere elekrische Verbindung zwischen dem Schirmleiter des eingespannten Kabels und einem entsprechenden Massekontakt ermöglichen und das Kabel gleichzeitig fest einspannen, so daß die Kontaktschelle von einem eventuellen auf das Kabel ausgeübten Zug entlasten wird. Die Schellenteile sind aus Kunststoff im Spritzgußverfahren herstellbar. Ihre Montage ist äußerst einfach. Die Kabelschellen beider Ausführungsformen können bereits beider Konfektionierung der Kabel an den vorgesehenen Stellen angeordnet werden. Beim Einbau der Kabel in Geräte oder andere Gehäuse braucht nur noch die mechanische Befestigung der Kabelschellen an den jeweiligen Gehäuseteilen zu erfolgen.

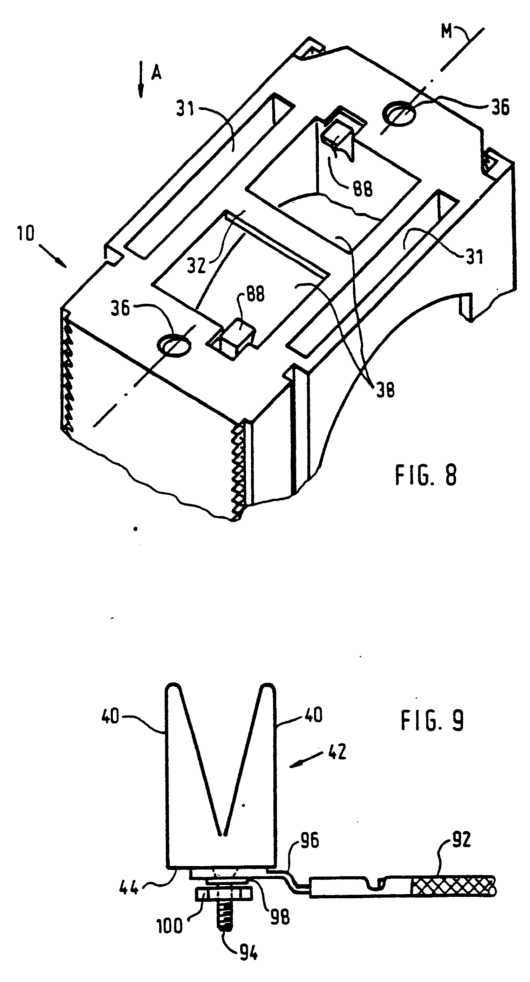

Zu der in den Figuren 1 bis 4 dargestellten Ausführungsform der erfindungsgemäßen Kabelschelle wurde bisher gesagt, daß sie mit Hilfe von durch die Durchbrechungen 36 durchgesteckten Befestigungsschrauben an einem Schellenträger oder einer Kontaktschiene befestigt wird. Es bietet sich jedoch auch noch eine einfachere Befestigungsart, die nun im folgenden erläutert werden soll. Wie bereits in den Fig. 1 und 2 zu erkennen und in der Fig. 8 deutlicher dargestellt ist, ist in jeder Durchstecköffnung 38 eine federnde Rastnase 88 vorgesehen, die einstückig mit dem Schellenteil 10 ausgebildet ist. Die zu einem Schellenteil 10 gehörigen Rastnasen 88 sind gegenläufig bezüglich einer die U-Schenkel und den U-Quersteg des Schellenteiles 10 durchsetzenden Mittelebene M (Fig. 8) versetzt.

Die Rastnasen 88 sind zum Einrasten in Aussparungen 90 bestimmt, die in den Außenseiten der U-Schenkel 40 der Kontaktfeder 42 ausgebildet sind (Fig. 5). Dabei sind, wie man ebenfalls in Fig. 5 erkennen kann, die in den beiden U-Schenkeln 40 ausgebildeten Aussparungen 90 gegenläufig bezüglich einer durch die U-Schenkel 40 und den U-Quersteg 44 verlaufenden Hittelebene versetzt. Die Anordnung der Aussparungen 90 in der Kontaktfeder 42 ist dabei relativ zu der Anordnung der Rastnasen 88 in dem Schellenteil 10 so gewählt, daß die Rastnasen 88 nicht in die Aussparungen 90 einrasten können, wenn die Kontaktfeder 42 in das Schellenteil 10 in Richtung des Pfeiles A in Fig. 8 eingeschoben wird. In diesem Falle ergibt sich die in der Fig. 2 dargestellte Situation, in der die Kontaktfeder 42 in das Schellenteil 10 eingeschoben ist und dabei die zu diesem Schellenteil 10 gehörigen Rastnasen 88 zurückgedrückt hat.

Wird dagegen nun das zweite Schellenteil auf das erste Schellenteil aufgesteckt, wie dies in Fig. 4 zu erkennen ist, dann können die an dem zweiten Schellenteil angeordneten Rastnasen 88 in die Aussparungen 90 der Kontaktfeder 42 einrasten, so daß die Verbindung zwischen der Kontaktfeder und der aus den beiden Schellenteilen 10 bestehenden Kabelschelle sich nicht selbsttätig lösen kann. Durch Zusammendrücken der aus dem zweiten Schellenteil 10 herausragenden U-Schenkel 40 der Kontaktfeder 42 kann jedoch diese Rastverbindung zwischen den Rastnasen 88 und den Aussparungen 90 wieder gelöst werden, wodurch auch die Kabelschelle von der Kontaktfeder 42 abgezogen werden kann.

Diese Ausbildung hat den Vorteil, daß beispielsweise die Kontaktfeder auf einer Kontaktschiene 80 aufgeschweißt oder an dieser angenietet werden kann, wie dies in Fig. 6 dargestellt ist. Bei einem so vorbereiteten Gerät braucht nur noch die bereits mit dem Kabel 66 verbundene Kabelschelle auf die Kontaktfeder 42 aufgeschoben zu werden, bis die Rastnasen 88 in die Aussparungen 90 einrasten. Somit wird die Montage und Demontage eines Kabels in dem Gerät erheblich erleichtert und beschleunigt.

Auch die eingangs beschriebene Verbindung der Kabelschelle mit einer Erdungslitze kann auf diese Weise sehr einfach erfolgen, indem gemäß der Darstellung in Fig. 9 die Kontaktfeder 42 mit der Erdungslitze 92 verbunden wird, so daß wiederum eine rasche Verbindung zwischen der Kabelschelle und der Kontaktfeder bzw. der Abschirmung des Kabels und der Erdungslitze hergestellt werden kann. Zu diesem Zweck ist gemäß Fig. 9 an der Außenseite des U-Qersteges 44 der Kontaktfeder 42 ein Gewindebolzen oder -stift 94 angeschweißt, auf den ein Kabelschuh 96 mit einer Ringöse aufgesteckt und mittels einer Federscheibe 98 und einer Mutter 100 befestigt ist. An den Kabelschuh 96 kann die Erdungslitze 92 angeschlossen werden, die ihrerseits wiederum mittels einer nicht dargestellten Steckbuchse an einen Massebolzen eines Gerätes angeschlossen werden kann.

Somit ist auch die erfindungsgemäße Kabelschelle mühelos wieder mit herkömmlichen Erdungslitzen verbindbar.

Bei dem in dlen Fig. 1 bis 4 dargestellten Ausführungsbeispiel wurden der Einfachheit halber sowohl die Befestigungslöcher 36 als auch die Rastnasen 88 dargestellt. Es versteht sich, daß nur eines dieser Mittel vorgesehen zu werden braucht. Selbstverständlich können aber auch entsprechend der Darstellung beide Möglichkeiten an demselben Ausführungsbeispiel vorgesehen sein.

**Patentansprüche**

1. Kabelschelle, umfassend zwei miteinander verbindbare Schellenteile (10, 60), zwischen denen ein Kabel einklemmbar ist, und die von identisch ausgeformten Kunststoffteilen gebildet sind, dadurch gekennzeichnet, daß die beiden Schellenteile (10; 60) jeweils zwei durch einen Steg (32; 66) voneinander getrennte Durchstecköffnungen (38; 68) zum Durchstecken einer Kontaktfeder (42) und an einander zugekehrten Flächen zum Eingriff miteinander bestimmte Rastmittel (22, 30; 74, 78) aufweisen, daß die Kontaktfeder (42) aus einem U-förmig gebogenen Metallstreifen besteht, wobei die U-Schenkel der Kontaktfeder (42) annähernd in ihrer Längsmitte nach innen umgebogen sind, so daß sich ihre freien Enden (46) nahe dem U-Quersteg (44) der Kontaktfeder (42) berühren, und daß der Abstand der freien Enden (46) der Federschenkel (40) von dem U-Quersteg (44) der Kontaktfeder (42) mindestens gleich der Höhe des die beiden Durchstecköffnungen (38; 68) trennenden Steges (32; 66) ist.

2. Kabelschelle nach Anspruch 1, dadurch gekennzeichnet, daß die Rastmittel in Form von ineinander greifenden Zahnleisten (22, 30; 74, 78) ausgebildet sind.

3. Kabelschelle nach Anspruch 2, dadurch gekennzeichnet, daß die Zahnleisten (22, 30; 74, 78) ein Sägezahnprofil mit in Einschubrichtung zur Zahnspitze hin ansteigenden Zahnflanken aufweisen.

4. Kabelschelle nach Anspruch 2 oder 3, dadurch gekennzeichnet, daß jedes Schellenteil (60) einen im wesentlichen quaderförmigen Sockel (62) aufweist, der die Öffnung (68) zum Durchtritt der Kontaktfeder (42) aufweist und der an einer seiner Seiten Flächen mit einer Außenverzahnung (74) und an der entgegengesetzten Seitenfläche mit einem parallel zur Durchsteckrichtung der Kontaktfeder (42) gerichteten Lappen (76) versehen ist, an dessen Innenseite eine zum Eingriff mit der Außenverzahnung (74) an dem jeweils anderen Schellenteil (60) bestimmte Innenverzahnung (78) ausgebildet ist.

5. Kabelschelle nach einem der Ansprüche 1 bis 3, dadurch gekennzeichnet, daß die Schellenteile (10) von U-förmigen Bügeln gebildet sind, deren erster U-Schenkel (12) als Aufnahmeschiene zum Einschieben des jeweils zweiten U-Schenkels (14) des anderen Bügels ausgebildet ist, daß die Öffnung (38) zum Durchstecken der Kontaktfeder (42) in dem U-Quersteg (16) des Bügels ausgebildet ist und daß die Rastmittel (22, 30) an den einander zugekehrten Flächen der ineinander steckbaren U-Schenkel (12, 14) der Bügel ausgebildet sind.

6. Kabelschelle nach Anspruch 5, dadurch gekennzeichnet, daß an dem als Aufnahmeschiene ausgebildeten ersten U-Schenkel (12) mindestens eine nach innen weisende parallel zur Einschubrichtung des zweiten U-Schenkels (14) des anderen Schellenteils (10) gerichtete Innenzahnleiste (22) und an dem zweiten U-Schenkel (14) mindestens eine parallel gerichtete nach außen weisende Außenzahnleiste (30) ausgebildet ist.

7. Kabelschelle nach Anspruch 6, dadurch gekennzeichnet, daß die Aufnahmeschiene (2) die parallel zur Einschubrichtung gerichteten Ränder des zweiten U-Schenkels (14) umgreifende C-Profile (18) umfaßt und daß entlang des Randes jeweils eines Schenkels der C-Profile (18) die Innenzahnleiste (22) ausgebildet ist.

8. Kabelschelle nach einem der Ansprüche 5 bis 7, dadurch gekennzeichnet, daß im U-Quersteg (16) des Bügels mindestens eine Durchbrechung (36) zum Durchstecken einer Befestigungsschraube oder dergleichen zur Befestigung der Kabelschelle an einem Schellenträger (80) ausgebildet ist.

9. Kabelschelle nach einem der Ansprüche 1 bis 8, dadurch gekennzeichnet, daß an den Schellenteilen (10; 60) seitlich abstehende Befestigungsnasen (48, 50) zum Einschieben in C-förmige Trägerschienen (84) für die Kabelschellen ausgeformt sind.

10. Kabelschelle nach einem der Ansprüche 1 bis 9, dadurch gekennzeichnet, daß die Schellenteile (10; 60) auf ihrer dem einzuklemmenden Kabel (54, 66) zugewandten Innenseite mindestens einen zur Anlage an dem zu haltenden Kabel (54, 66) bestimmten scharfkantigen Vorsprung (58, 64) aufweisen.

11. Kabelschelle nach Anspruch 10, dadurch gekennzeichnet, daß der Vorsprung stegfömig ausgebildet ist und daß die nach innen weisende freie Stegkante (58, 64) konkav gekrümmt ist.

12. Kabelschelle nach Anspruch 10 oder 11, dadurch gekennzeichnet, daß eine Mehrzahl von dornförmigen Vorsprüngen vorgesehen ist.

13. Kabelschelle nach einem der Ansprüche 1 bis 12, dadurch gekennzeichnet, daß die Länge der Federschenkel (40) der Kontaktfeder (42) so gewählt ist, daß sie bei zusammengesteckten Schellenteilen (10; 60) etwa der Abmessung der Kabelschelle in der Einschubrichtung entspricht.

14. Kabelschelle nach einem der Ansprüche 1 bis 13, dadurch gekennzeichnet, daß jedes Schellenteil (10) im Bereich der Durchstecköffnung (38) für die Kontaktfeder (42) mindestens einen Rastvorsprung (88) aufweist, der zum Eingriff mit mindestens einem komplementären Gegenrastelement an der Kontaktfeder (42) bestimmt ist.

15. Kabelschelle nach Anspruch 14, dadurch gekennzeichnet, daß der Rastvorsprung jeweils von einer federnden Rastnase (88) und das zugehörige Gegenrastelement von einer Aussparung (90) in der Kontaktfeder (42) gebildet ist.

16. Kabelschelle nach Anspruch 15, dadurch gekennzeichnet, daß die Rastnase (88) jeweils einstückig mit dem Schellenteil (10) ausgebildet ist.

17. Kabelschelle nach Anspruch 15 oder 16, dadurch gekennzeichnet, daß im Bereich jeder Durchstecköffnung (38) eine Rastnase (88) angeordnet ist und daß die Aussparungen (90) in den U-Schenkeln (40) der Kontaktfeder (42) ausgebildet sind.

18. Kabelschelle nach Anspruch 17, dadurch gekennzeichnet, daß die Rastnasen (88) eines Schellenteiles (10) sowie die Aussparungen (90) in der Kontaktfeder (42) jeweils gegenläufig versetzt gegenüber einer die U-Schenkel (12, 14; 40) und den U-Quersteg (16; 44) von Schellenteil (10) und Kontaktfeder (42) durchsetzenden Mittelebene (M) angeordnet sind und daß der Abstand der Aussparungen (90) in den U-Schenkeln (40) der Kontaktfeder (42) von deren U-Quersteg (44) so gewählt ist, daß beim Einstecken der Kontaktfeder (42) in die Kabelschelle die Rastnasen (88) des Schellenteiles (10), das dem U-Quersteg (44) der Kontaktfeder (42) ferner liegt, in die Aussprаungen (90) der Kontaktfeder (42) einrasten.

19. Kabelschelle nach einem der Ansprüche 14 bis 18, dadurch gekennzeichnet, daß die Kontaktfeder (42) in ihrem U-Quersteg (44) eine Durchbrechung zum Durchtritt einer Anschlußschraube aufweist.

20. Kabelschelle nach einem der Ansprüche 14 bis 18, dadurch gekennzeichnet, daß an der Außenseite des U-Quersteges (44) der Kontaktfeder (42) ein Gewindebolzen (94) zur Verbindung der Kontaktfeder (42) mit einem elektrischen Leiter (92) befestigt ist.

## Claims

1. A cable clamp comprising two interconnectable clamp parts (10, 60) between which a cable can be clamped and which are embodied by identically shaped plastics members, characterised in that the two clamp parts (10; 60) are each formed with two push-through openings (38; 68), through which a contact spring (42) can be pushed and which are in each case separated from one another by a web (32; 66), and with interengaging locking means (22, 30; 74, 78) on surfaces near one another; the contact spring (42) is in the form of a U-shaped metal strip, the U-arms of the spring (42) being bent inwardly substantially at their longitudinal centre so that their free ends (46) contact one another near the U-cross-web (44) of the spring (42); and the distance between the free ends (46) of the spring arms (40) and the cross-web (44) of the contact spring (42) is at least equal to the height of the web (32; 66) separating the push-through openings (38; 68).

2. A clamp according to claim 1, characterised in that the locking means take the form of meshing toothed strips (22, 30; 74, 78).

3. A clamp according to claim 2, characterised in that the toothed strips (22, 30; 74, 78) have a sawtooth profile in which the tooth flanks rise towards the tooth tip in the push-in direction.

4. A clamp according to claim 2 or 3, characterised in that each clamp part (60) has a substantially parallelepipedic base (62) which is formed with the opening (68) for the contact spring (42) and which has on one of its side surfaces external toothing (74) and on the opposite side surface a member (76) which extends parallel to the push through direction of the contact spring (42) and whose inside is formed with internal toothing (78) adapted to mesh with the external toothing (74) on the other clamp part (60).

5. A clamp according to any of claims 1 - 3, characterised in that the clamp parts (10) are embodied by U-shaped stirrups whose first U-arm (12) is in the form of a receiving rail for pushing in the corresponding second U-arm (14) of the other stirrup, the opening (38) for the contact spring (42) is in the web (16) of the stirrup, and the locking means (22, 30) are formed on those surfaces of the plug-in U-arms (12, 14) of the stirrups which are near one another.

6. A clamp according to claim 5, characterised in that at least one internally extended internally toothed strip (22) which is directed parallel to the push-in direction of the second U-arm (14) of the other clamp part (10) is formed on the first U-arm (12) or receiving rail, and at least one parallel and outwardly extending externally tooth strip (30) is formed on the second U-arm (14).

7. A clamp according to claim 6, characterised in that the receiving rail (12) comprises the C-sections extending around those edges of the second U-arm (14) which are directed parallel to the push-in direction, and the internally toothed strip (22) is formed along the edges of one arm of the C-sections (18).

8. A clamp according to any of claims 5 - 7, characterised in that the web (16) of the stirrup is formed with at least one perforation (36) for pushing through a fixing screw or the like to secure the clamp to a clamp carrier (80).

9. A clamp according to any of claims 1 - 8, characterised in that the clamp parts (10, 60) are formed with laterally projecting fixing lugs (48, 50) for engagement in C-shaped support rails (84) for the clamps.

10. A clamp according to any of claims 1 - 9, characterised in that the clamp parts (10, 60) have, on their inside near the cable (54, 66) to be clamped, at least one sharp -edged projection (58, 64) adapted to engage the cable (54, 66) required to be retained.

11. A clamp according to claim 10, characterised in that the projection is web-like and the inwardly extending free web edge (58, 64) has a concave curvature.

12. A clamp according to claim 10 or 11, characterised in that a number of pin-like projections are provided.

13. A clamp according to any of claims 1 - 12, characterised in that the length of the arms (40) of the contact spring (42) is such as, with the clamp parts (10; 60) in the pushed-together state, to correspond substantially to the dimension of the clamp in the push-in direction.

14. A clamp according to any of claims 1 - 13, characterised in that each clamp part (10) has at least one catch projection (88) near the opening (38) for the contact spring (42), the latter projection being engageable with at least one companion catch element on the contact spring (42).

15. A clamp according to claim 14, characterised in that the locking or catch projection is formed by a resilient lug (88) and the companion locking or catch element is in the form of an aperture (90) in the contact spring (42).

16. A clamp according to claim 15, characterised in that the lug (88) is integral with the clamp part (10).

17. A clamp according to claim 15 or 16, characterised in that the lug (88) is disposed near each push-through opening (38) and the U-arms (40) of the spring (42) are formed with the apertures (90).

18. A clamp according to claim 17, characterised in that the lugs (88) of one clamp part (10) and the apertures (90) in the spring (42) are disposed offset in opposite directions opposite a centre-plane (M) which extends through the U-arms (12, 14; 40) and the web (16; 44), and the distance between, on the one hand, the apertures (90) in the contact spring arms (40) and, on the other hand, the cross-web (44) is such that when the spring (42) is introduced into the clamp the lugs (88) of the part (10) which is relatively remote from the cross-web of the spring (42) engage in the apertures (90) in the spring (42).

19. A clamp according to any of claims 14 - 18, characterised in that the spring (42) is formed in its cross-web (44) with an aperture through which a connecting screw can extend.

20. A clamp according to any of claims 14 - 18, characterised in that a screwthreaded pin (94) for connecting the spring (42) to an electrical conductor (92) is secured to the outside of the cross-web (44) of the spring (42).


**Revendications**

1. Collier serre-câble comprenant deux parties de collier (10, 60) assemblables l'une avec l'autre entre lesquelles un câble peut être serré et qui sont constituées par des pièces en matière plastique à configurations identiques caractérisé en ce que les deux parties de collier (10, 60) présentent chacune deux ouvertures de passage (38, 68) séparées l'une de l'autre par une traverse (32 ; 66) pour le passage d'un ressort de contact (42) et des moyens d'accrochage (22, 30; 74, 78) sur des surfaces tournées l'une vers l'autre pour l'accrochage les uns avec les autres, le ressort de contact (42) est constitué par une bande de métal pliée ayant une configuration en U dans laquelle les branches du profil en U du ressort de contact (42) sont pliées vers l'intérieur au voisinage de leur milieu en sens longitudinal de sorte que leurs extrémités libres (46) se trouvent à proximité de la branche transversale (44) du U du ressort de contact (42) et l'intervalle entre les extrémités libres (46) des branches de ressort (40) et la branche transversale (44) du profil en U du ressort de contact (42) est au moins égale à la hauteur des traverses (32; 66) séparant les deux ouvertures de passage (38; 68).

2. Collier serre-câble selon la revendication 1 caractérisé en ce que les moyens d'accrochage sont réalisés sous la forme de barrettes dentées (22, 30, 74, 78) s'accrochant les unes avec les autres.

3. Collier serre-câble selon la revendication 2 caractérisé en ce que les barrettes dentées (22, 30; 74, 78) présentent un profil en dents de scie avec des flancs de dent montant vers le sommet des dents dans la direction d'assemblage.

4. Collier serre-câble selon la revendication 2 ou 3 caractérisé en ce que chaque partie de collier (60) présente un socle (62) essentiellement parallélépipédique qui présente les ouvertures (68) pour le passage du ressort de contact (42) et qui est prévu sur l'une de ses faces latérales avec une denture extérieure (74) et sur la face latérale opposée avec une languette (76) dirigée parallèlement à la direction d'enfichage du ressort de contact (42) sur la face intérieure de laquelle est réalisée une denture intérieure (78) destinée à s'accrocher avec la denture extérieure (74) de l'autre partie de collier (60).

5. Collier serre-câble selon l'une des revendications 1 à 3 caractérisé en ce que les parties de collier (10) sont conformées en étrier à profil en U dont la première branche du profil en U (12) est réalisée comme une glissière réceptrice pour l'introduction de chacune des secondes branches du profil en U (14) de l'autre étrier, l'ouverture (38) pour le passage du ressort de contact (42) est réalisée dans la branche transversale (16) en U de l'étrier et les moyens d'accrochage (22, 30) sont prévus sur les surfaces tournées l'une vers l'autre des branches du profil en U (12, 14) assemblables les unes dans les autres de l'étrier.

6. Collier serre-câble selon la revendication 5 caractérisé en ce que sur la première branche du profil en U conformée en glissière réceptrice est prévue au moins une barrette à denture intérieure (22) dirigée parallèlement vers l'intérieur à la direction d'assemblage de la seconde branche (14) du profil en U de l'autre partie de collier (10) et sur la seconde branche (14) du profil en U est prévue au moins une barrette à denture extérieure (30) dirigée parallèlement vers l'extérieur.

7. Collier serre-câble selon la revendication 6 caractérisé en ce que la glissière réceptrice (12) comprend des profilés en C (18) enveloppant les bords de la deuxième branche (14) du profil en U dirigés parallèlement à la direction d'assemblage et le long du bord de chacune des branches du profil en C (18) est prévue la barrette à denture intérieure (22).

8. Collier serre-câble selon les revendications 5 à 7 caractérisé en ce que dans la branche transversale (16) du profil en U de l'étrier, est réalisée au moins une ouverture de passage (36) pour le passage d'une vis de fixation ou d'un élément analogue pour la fixation du collier serrecâble à un support de collier (80).

9. Collier serre- câble selon l'une des revendications 1 à 8 caractérisé en ce que des nez de fixation (48, 50) en saillie latéralement sont prévus sur les parties de collier (10, 60) pour le coulissement de glissières porteuses (84) à profil en C pour le collier serre-câble.

10. Collier serre-câble selon l'une des revendications 1 à 9 caractérisé en ce que les parties de collier (10, 60) présentent sur leurs faces intérieures tournées vers le câble à serrer (54, 66) au moins une saillie (58, 64) à arête acérée destinée à l'application au câble retenu (58, 64).

11. Collier serre-câble selon la revendication 10 caractérisé en ce que la saillie est réalisée de façon analogue à une traverse et le bord libre (58, 64) de la traverse dirigé vers l'intérieur est incurvé de manière concave.

12. Collier serre-câble selon la revendication 10 ou 11 caractérisé en ce qu'il est prévu une pluralité de saillies ayant la forme de piquants.

13. Collier serre-câble selon les revendications 1 à 12 caractérisé en ce que la longueur de la branche (40) du ressort de contact (42) est choisie de telle sorte qu'elle corresponde environ à la dimension du collier serre-câble dans la direction de l'introduction quand les parties de collier (10, 60) sont assemblées ensemble.

14. Collier serre-câble selon l'une des revendications 1 à 13 caractérisé en ce que chaque partie de collier (10) présente dans la zone de l'ouverture de passage (38) pour le ressort de contact (42) au moins une saillie d'accrochage (88), qui est destinée à l'accrochage avec au moins un élément antagoniste d'accrochage complémentaire faisant partie du ressort de contact (42).

15. Collier serre-câble selon la revendication 14 caractérisé en ce que chaque saillie d'accrochage en saillie est constituée par un nez d'accrochage élastique (88) et l'élément antagoniste d'accrochage correspondant par un évidement (90) prévu dans le ressort de contact (42).

16. Collier serre-câble selon la revendication 15 caractérisé en ce que le nez d'accrochage (88) est réalisé en une seule pièce avec la partie de collier (10).

17. Collier serre-câble selon la revendication 15 ou 16 caractérisé en ce que dans la zone de chaque ouverture de passage (38) est disposé un nez d'accrochage (88) et les évidements (90) sont ménagés dans les branches du profil en U (40) du ressort de contact (42).

18. Collier serre-câble selon la revendication 17 caractérisé en ce que le nez d'accrochage (88) d'une partie de collier (10) ainsi que les évidements (90) ménagés dans le ressort de contact (42) sont décalés chacun respectivement de manière inversée par rapport à un plan médian (M) traversant l'une des branches du profil en U (12, 14; 40) et la branche transversale du profil en U (16, 44) de la partie de collier (10) et du ressort de contact (42), et la distance entre les évidements (90) ménagés dans les branches (40) du profil en U du ressort de contact (42) et la branche transversale (44) du profil en U est choisie de telle sorte qu'au moment de l'introduction du ressort de contact (42) dans le collier serre-câble, les nez d'accrochage (88) de la partie de collier (19) qui sont plus éloignés de la branche transversale (44) du profil en U s'accrochent avec les évidements (90) du ressort de contact (42).

19. Collier serre-câble selon l'une des revendications 14 à 18 caractérisé en ce que le ressort de contact (42) présente dans la branche transversale (44) du profil en U une ouverture par le passage d'une vis de fixation.

20. Collier serre-câble selon l'une des revendications 14 à 18 caractérisé en ce qu'une vis (94) est fixée sur le côté extérieur de la branche transversale (44) du profil en U du ressort de contact (42) pour la liaison de ce ressort de contact (42) avec un conducteur électrique (92).

FIG. 1

FIG. 2

FIG. 3

FIG. 4

FIG. 5

FIG. 6

FIG. 7

FIG. 8

FIG. 9